# EUROPÄISCHE PATENTSCHRIFT

(11) **EP 0 452 803 B1**
(45) Veröffentlichungstag und Bekanntmachung des Hinweises auf die Patenterteilung: **26.10.1994**
(21) Anmeldenummer: 91105739.6
(22) Anmeldetag: 11.04.1991
(51) Int. Cl.: G01D 5/20

(54) **Positionsaufnehmer**
Position sensor
Capteur de position

(43) Veröffentlichungstag der Anmeldung: 23.10.1991
(73) Patentinhaber: FEV Motorentechnik GmbH & Co. KG, D-52078 Aachen (DE)
(72) Erfinder: Kottwitz, Raimund, Dipl.Ing., W-3051 Wölpinghausen (DE); Bendieck, Axel, Dipl.-Ing., D-5000 Köln 41 (DE); Hans, Hermann, D-5216 Niederkassel (DE); Gürich, Gunter Lothar, Dr.-Ing., D-5100 Aachen (DE); Wagner, Thomas, Dipl.-Ing., D-5489 Jammelshofen (DE)
(74) Vertreter: Langmaack, Jürgen, Dipl.-Ing.

(56) Entgegenhaltungen:
- DE-A- 2 407 240
- FR-A- 2 311 276
- US-A- 3 205 485
- US-A- 4 395 711
- US-A- 4 523 562

## Beschreibung

Die Erfindung betrifft ein Meßsystem gemäß dem Oberbegriff des Patentanspruchs 1.

Es ist bekannt (DE-A 35 25 199), ein Weg-Meßsystem mit einem induktiven Geber aufzubauen.

Zu diesem Zweck sitzt ein als Konus ausgebildetes Meßelement in einer Meß- oder Ringspule, wobei unter einer Relativbewegung der Meßinduktivität und des Meßelements eine Änderung der Luftspalte eintritt, wodurch der Induktivitätswert der Meßinduktivität verändert wird.

Hierbei wirkt sich das als Konus ausgebildete Meßelement nachteilig aus, da es rotationssymetrisch ist und an einem Weggeber angebracht werden muß und somit eine Massenerhöhung hervorruft.

Die rotationssymetrische Ausbildung des Meßelements ist auch konstruktiv hinderlich.

Die Linearität des Meßsystems hängt außerdem von der Wicklungsart der verwendeten Spulen ab.

Die in der oben genannten Offenlegungsschrift dargestellte Auswertschaltung ist aufwendig aufgebaut, so daß eine kompakte Einheit aus Meßwertaufnehmer und Auswertschaltung kaum möglich erscheint. Außerdem arbeitet die Auswertschaltung mit hohen Frequenzen, die entweder gestört werden können oder selber eine Beeinflußung anderer Signale hervorrufen können. Die Auswertschaltung arbeitet überwiegend hochohmig, so daß eine Beeinflußung des Meßsignals durch die oft hohen Störungen, insbesondere im Motorkabelbaum, nur schwer auszuschließen ist.

Weiterhin ist die US-A 32 05 485 bekannt, die einen elektromechanischen Wandler mit einem Wirbelstrom zeigt, sich aber nicht mit der Befestigung von Elementen an Brennkraftmaschinen (Regelstange) befasst. Auch konusartige Ausformungen bzw. zunehmende Vertiefungen sind in diesem Dokument nicht offenbart.

Weiterhin zeigt die US-A 45 23 562 einen allgemeinen Stand der Technik von elektrischen Verschiebungssensoren in Verwendung mit Brennkraftmaschinen. Hinweise darauf, daß dieser Verschiebungssensor nach dem Prinzip der Änderung der transformatorischen Kopplung arbeitet und Ausgestaltungen des Kernes sind diesem Dokument nicht zu entnehmen.

Zuletzt zeigt die US-A 43 95 711 spezielle Ausformungen eines Kernes, wobei diese Ausformungen des rotationssymmetrischen Kernes wie bei der DE-A 35 25 199 als nachteilig anzusehen sind.

Der vorliegenden Erfindung liegt die Aufgabe zugrunde, ein Meßsystem bereitzustellen, daß die oben aufgeführten Nachteile vermeidet, und daß keine Beeinflußung der mechanischen Bewegung des Meßobjekts verursacht.

Diese Aufgabe der Erfindung wird durch die kennzeichnenden Merkmale des Anspruchs 1 gelöst und durch weitere Ausgestaltungen, die in den Ansprüchen 2 bis 4 dargelegt sind, ergänzt.

Die Positionsmessung eines Meßobjekts erfolgt mit einem induktiven Positionsaufnehmer nach dem Prinzip der Änderung der transformatorischen Kopplung, wobei ein Teil eines Kerns einen metallischen Wirbelstromschirm des induktiven Positionsaufnehmers bildet.

Dies hat folgende Vorteile:
□ keine Beeinflussung der mechanischen Bewegung des Meßobjekts,
□ Gewichtsersparnis durch eine besondere Ausformung in dem Meßobjekt,
□ berührungslose Positionserfassung,
□ niederohmige und dadurche störsichere Meßwertausmessung.

Erfindungsgemäß sind eine primäre und eine sekundäre Spule auf je einem Schenkel, die sich gegenüberliegen, eines magnetischen Kreises angebracht, um einen einfachen Meßaufbau zu realisieren.

Die primäre Spule wird von einem Generator, bspw. einem Wechselspannungsgenerator, erregt, während an der sekundären Spule der Abgriff eines Meßsignals erfolgt.

Der magnetische Kreis ist durch einen oder zwei Luftspalte unterbrochen, so daß die Möglichkeit gegeben ist, den magnetischen Fluß so zu beeinflussen, daß sich ein funktionaler Zusammenhang des Meßsignals, das an der sekundären Spule abgegriffen wird, zur Position des metallischen Wirbelstromschirmes ergibt. Dabei ist die Linearität des Übertragungsverhaltens nicht von der Wicklungsart der verwendeten Spulen abhängig.

Durch eine Vertiefung und/oder durch eine konusartige Ausformung, die in dem Meßobjekt eingebracht ist, verlängert sich die Meßstrecke um die Länge der Vertiefung bzw. der konusartigen Ausformung.

Die konusartige Ausformung besteht aus einem Rechteck mit einem auf die beliebige Seite des Rechtecks aufgesetzten Dreieck.

Länge, Breite und Höhe der konusartigen Ausformung sind frei wählbar in Bezug auf eine optimale Ausgangslinearität und die räumliche und fertigungstechnische Handhabbarkeit.

Möglich sind auch Rechteck- und Dreieckformen, mit einfallenden bzw. ausbeulenden Seitenlinien, z. B. Trapezformen oder sphärische Dreiecke. Bei Verwendung von Rechteckformen ergibt sich für das Ausgangssignal in einem weiten Bereich ein linearer Verlauf der Ausgangsspannung zur Wegstrecke. Dadurch kann die Meßstrecke beliebig lang werden.

In einer besonders vorteilhaften Ausgestaltung der Erfindung werden die Schenkel des magnetischen Kreises in Bewegungsrichtung des Meßobjektes etwa so lang wie die Meßstrecke ausgeführt.

In Weiterbildung der Erfindung erfolgt die Erzeugung eines magnetischen Wechselflußes in der primären Spule vorzugsweise mit dem Wechselspannungsgenerator mit einem konstanten Innenwiderstand, so daß immer eine konstante Spannung am Ausgang des Wechselspannungsgenerators zur Verfügung steht.

Der magnetische Wechselfluß wird über den metallischen Wirbelstromschirm über einen oder zwei Luftspalte zu der sekundären Spule, der Meßspule, geleitet.

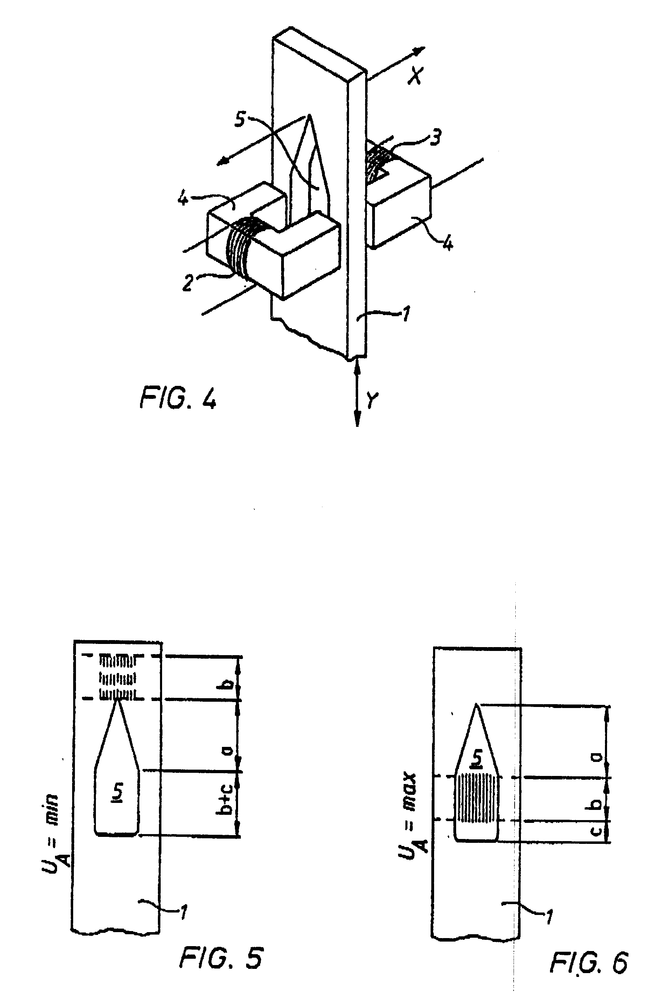

Der Meßwiderstand einer nachgeschalteten Meßschaltung belastet die Meßspule derart, daß sich die Flußverteilung aufgrund der Wirkströme in den beiden Spulen so ergibt, daß die Bewegung des Kerns im Luftspalt in Richtung von einer der beiden Spulen (entspricht der in Figur 4 gezeigten x-Richtung) eine minimale Änderung des Meßsignals verursacht, jedoch eine Bewegung des Kerns an den Spulen vorbei (entspricht der in Figur 4 gezeigten y-Richtung) die eigentliche Meßbeeinflußung hervorruft.

Die konstruktive Festlegung der Luftspalte zwischen dem Flußleitmittel des magnetischen Kreises und des Kerns erfolgt unter den gleichen Gesichtspunkten.

Die Kurvenform der speisenden Wechselspannung kann beliebig gewählt werden, so lange diese stetig, periodisch und von konstanter Amplitude ist.

Ein Gleichstrom, von einer Gleichstromquelle geliefert, durch eine der beiden Spulen kann auf das Meßobjekt, wenn es aus ferromagnetischem Material besteht, eine definierbare Kraft ausüben. So kann eine eindeutig definierte Lage (z. B. Mitte) im Luftspalt gefunden werden. Gleichzeitig kann das Meßobjekt mit dieser Kraft in Richtung eines "Bremsklotzes" oder in Richtung der Oberfläche eines Mittelschenkels bewegt werden und auf diesen gedrückt oder gezogen werden, so daß sich eine Bremswirkung ergibt, die ein mögliches Schwingen (bspw. "Reglersägen") des Kerns, bzw. der Regelstange, verhindert.

In einer weiteren Ausführung der Erfindung ist auf den Schenkeln des magnetischen Kreises eine dritte Spule angeordnet. Diese Spule wird zur Kompensation von Querempfindlichkeiten verwendet. Eine Anordnung von mehr als drei Spulen auf den Schenkeln des magnetischen Kreises ist durchaus denkbar.

Die nachfolgende Zeichnungsbeschreibung beinhaltet weitere Ausgestaltungen der Erfindung, die in den Figuren dargestellt sind, wobei es sich in der Zeichnungsbeschreibung bei dem Meßobjekt um die Regelstange einer Einspritzanlage einer Brennkraftmaschine handelt.

Es zeigen:
- Figur 1:: Meßvorrichtung, wenn eine Regelstange aus elektrisch gut leitfähigem Material zum Einsatz kommt (z. B. Aluminium).
- Figur 2:: Position der Regelstange aus Aluminium mit minimaler Ausgangsspannung.
- Figur 3:: Position der Regelstange aus Aluminium mit maximaler Ausgangsspannung.
- Figur 4:: Meßvorrichtung, wenn eine Regelstange aus magnetisch leitfähigem Material zum Einsatz kommt (z. B. Eisen).
- Figur 5:: Position der Regelstange aus Eisen mit minimaler Ausgangsspannung.
- Figur 6:: Position der Regelstange aus Eisen mit maximaler Ausgangsspannung.
- Figur 7:: Schaltungsanordnung des induktiven Positionsaufnehmers.

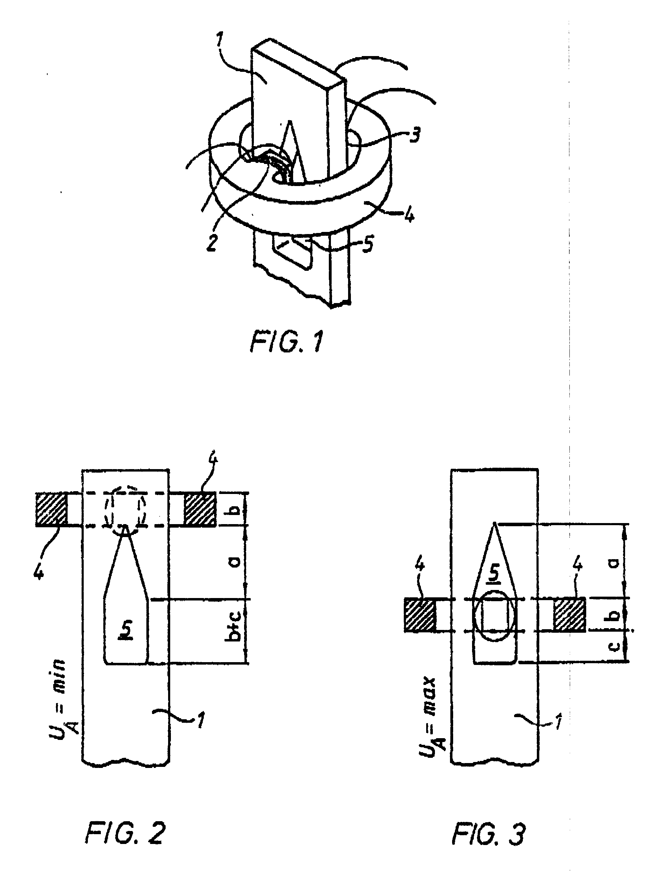

In Figur 1 ist eine Meßvorrichtung gezeigt, wenn die Regelstange 1 aus elektrisch gut leitfähigem Material (z. B. Aluminium) besteht.

Die primäre Spule 2 und die sekundäre Spule 3 befinden sich jeweils auf einem zum Mittelpunkt des kreisförmigen Flußleitmittels 4 gerichteten Mittelschenkel. Die Regelstange 1 befindet sich mit ihrer Längsseite parallel zu den Stirnflächen der Mittelschenkel im Inneren des kreisförmigen Flußleitmittels 4. Die Regelstange 1 besitzt dergestalt eine konusartige Ausformung 5, daß einem Rechteck auf seine kürzere Seite ein Dreieck passend aufgesetzt ist. Die durch die primäre Spule 2 erzeugten Feldlinien werden zu einem Luftspalt in der Mitte der Regelstange 1 geleitet. In Figur 2 befindet sich die Regelstange 1 in einer Position mit minimaler Ausgangsspannung an der sekundären Spule 3. Der Luftspalt ist vollständig durch die Regelstange 1 abgedeckt. Der Fluß durch die Mittelschenkel des Flußleitmittels 4 wird durch Wirbelströme im leitfähigen Material der Regelstange 1 stark geschwächt. Es wird daher nur eine geringe Spannung in der sekundären Spule 3 induziert.

Gemäß Figur 3 befindet sich die Regelstange 1 in einer Position mit maximaler Ausgangsspannung. Der Luftspalt ist frei von leitfähigem Material. Die Feldlinien können die sekundäre Spule 3 gut erreichen und induzieren eine entsprechend hohe Ausgangsspannung.

Zwischen den beiden Positionen in Figur 2 und Figur 3 ergibt sich je nach Position der Regelstange 1 und damit je nach Geometrie der konusartigen Ausformung 5 eine stetige Veränderung der Ausgangsspannung.

Ein minimaler Meßweg ist gegeben, wenn ein Rechteck mit der Länge b vorgesehen ist. Dies entspricht in etwa der Breite des Flußleitmittels.

Zur Verlängerung des Meßweges um die Strecke a wird ein Dreieck mit der Höhe a angefügt. Dies erfordert dann die zusätzliche Strecke c, um den Einfluß der Schirmwirkung der Position der maximalen Ausgangsspannung in der gleichen Weise zu verlängern, wie dies durch die Strecke a verursacht wird. Der maximale Meßweg entspricht damit der Strecke a + b.

Figur 4 zeigt eine Meßvorrichtung, wenn die Regelstange 1 aus magnetisch leitfähigem Material (z. B. Eisen) gefertigt ist. Auf dem unteren Steg der beiden U-förmigen Flußleitmittel 4 sitzen die primäre Spule 2 und die sekundäre Spule 3. Die Enden der beiden U-förmigen Flußleitmittel 4 stehen sich gegenüber und sind durch zwei Luftspalte, in denen sich die Regelstange 1 mit der konusartigen Ausformung 5 befindet, unterbrochen.

Die Bewegung der Regelstange 1 erfolgt in y-Richtung, während eine Bewegung der Regelstange 1 in x-Richtung nur eine minimale Beeinflußung der Ausgangsspannung verursacht.

In Figur 5 befindet sich die Regelstange 1 in einer Position minimaler Ausgangsspannung, die dadurch entsteht, daß zum einen die primären Feldlinien durch die Regelstange 1 direkt, ohne die sekundäre Spule 3 zu passieren, zurückgeleitet werden, zum anderen wirkt das Material der Regelstange 1 als Wirbelstromschild und schwächt die Feldlinien im Luftspalt.

In Figur 6 erreicht die Ausgangsspannung ein Maximum, da die Regelstange 1 nur einen geringen magnetischen Nebenschluß darstellt, sondern die Ankopplung der sekundären Spule 3 wird noch verbessert durch die Verkürzung des Luftspaltes mittels der magnetischen Leitfähigkeit des Materials der Regelstange 1.

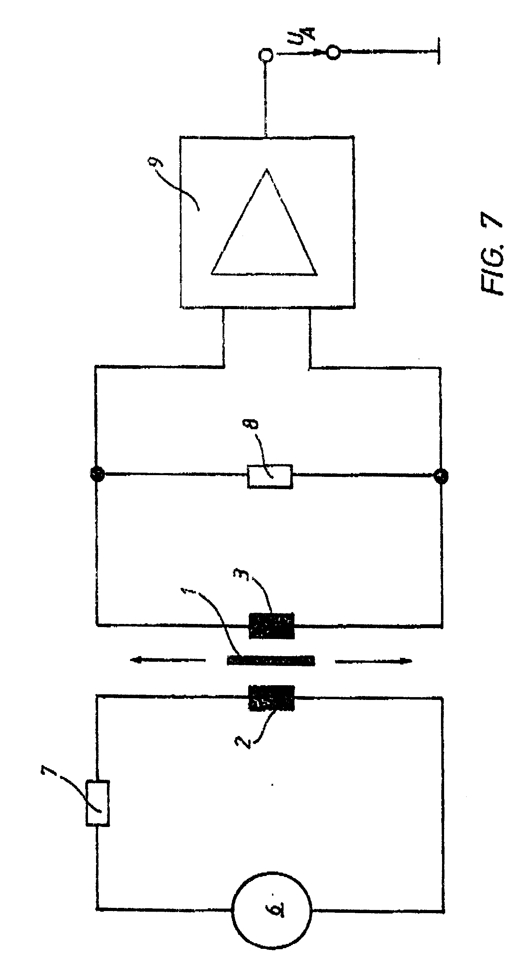

Figur 7 zeigt einen Generator 6, der als Wechselspannungsgenerator ausgebildet ist, an dem über einen konstanten Innenwiderstand 7 die primäre Spule 2 angeschlossen ist. Der Generator 6 erzeugt eine beliebige periodische Wechselspannung (z. B. Sinus-, Dreieck- oder Rechteckspannung) mit konstanter Amplitude oder einen konstanten Strom und damit einen magnetischen Wechselfluß, der über die Regelstange 1, die in Figur 7 symbolisch dargestellt ist, zu der sekundären Spule 3 geleitet wird. Die Regelstange 1 bewegt sich in Richtung der beiden eingezeichneten Pfeile. Die sekundäre Spule 3 steht mit einem Meßwiderstand 8 in Verbindung, an dem das Meßsignal ansteht. Ein an dem Meßwiderstand 8 angeschlossener Verstärker 9 verstärkt das Meßsignal, das durch eine nachgeschaltete Auswerteinheit (z. B. Gleichrichter) weiterverarbeitet werden kann. Das Meßsignal ist in diesem Fall die am Ausgang des Verstärkers 9 anliegende Spannung U_{A}. Eine Linearisierung des Meßsignals kann in einer nachgeschalteten Meßelektronik erfolgen.

## Patentansprüche

1. Induktiver Positionsaufnehmer zur Positionsmessung eines bewegbaren Meßobjektes, mit einem Spulensystem , das durch einen mit der Bewegung des Meßobjektes gekoppelten Kerns beeinflußbar ist,
*dadurch gekennzeichnet*, daß der induktive Positionsaufnehmer nach dem Prinzip der Änderung der transformatorischen Kopplung arbeitet und ein zur Änderung der transformatorischen Kopplung erforderlicher metallischer Wirbelstromschirm aus zumindest einem Teil des Kernes gebildet ist und daß das Meßobjekt die Regelstange (1) der Einspritzpumpe einer Brennkraftmaschine ist und der eine konusartige Ausformung (5) und/oder eine zunehmende Vertiefung aufweisende Kern mit der Regelstange (1) verbunden ist.

2. Vorrichtung nach Anspruch 1,
dadurch gekennzeichnet, daß der Kern eine konusartige Ausformung (5) besitzt, die aus einem Rechteck mit einem auf eine beliebige Seite des Rechtecks aufgesetzten Dreieck aufweist.

3. Vorrichtung nach Anspruch 2,
dadurch gekennzeichnet, daß das Spulensystem wenigstens eine primäre Spule (2) und eine sekundäre Spule (3) aufweist.

4. Vorrichtung nach Anspruch 3,
dadurch gekennzeichnet, daß die Spulen (2) und (3) auf Schenkeln eines magnetischen Kreises angebracht sind.

5. Vorrichtung nach einem der vorhergangenen Ansprüche,
dadurch gekennzeichnet, daß der magnetische Kreis durch zumindest einen Luftspalt unterbrochen ist.

6. Vorrichtung nach einem der vorhergehenden Ansprüche,
dadurch gekennzeichnet, daß von einem Generator (6) eine Wechselspannung in beliebiger Kurvenform, die stetig, periodisch und von konstanter Amplitude ist, erzeugbar ist, und der Generator (6) einen konstanten Innenwiderstand (7) aufweist.

7. Vorrichtung nach Anspruch 6,
dadurch gekennzeichnet, daß die primäre Spule (2) mit dem Generator (6) verbunden ist.

8. Vorrichtung nach Anspruch 7,
dadurch gekennzeichnet, das die sekundäre Spule (3) mit einer Meßschaltung verbunden ist und daß diese Meßschaltung einen konstanten Innenwiderstand (8) aufweist.

9. Vorrichtung nach einem der vorhergehenden Ansprüche,
dadurch gekennzeichnet, daß zumindest eine der bei den Spulen (2) oder (3) mit einer Gleichstromquelle verbunden ist und der Kern aus ferromagnetischem Material besteht.

10. Vorrichtung nach einem der vorhergehenden Ansprüche,
dadurch gekennzeichnet, daß der Kern eine rechteckige Ausformung aufweist.

11. Vorrichtung nach einem der Ansprüche 4 bis 10,
dadurch gekennzeichnet, daß auf den Schenkeln des magnetischen Kreises eine dritte Spule angeordnet ist.

## Claims

1. An inductive position sensor for measuring the position of a movable object to be measured, with a coil system which can be influenced by the movement of a core coupled to the measured object,
*characterised in that* the inductive position sensor functions according to the principle of a change in transformer coupling, and a metallic eddy current shield necessary for changing the transformer coupling is composed of at least one part of the core, and that the measured object is the control rod (1) of the injection pump of an internal combustion engine, the core being connected to the control rod (1) and being provided with a conical slot or cutout (5) and/or an increasing depression.

2. A device according to claim 1,
characterised in that the core has a conical slot or cutout (5) which comprises a rectangle with a triangle positioned on top of any chosen side of the rectangle.

3. A device according to claim 2,
characterised in that the coil system has at least one primary coil (2) and one secondary coil (3).

4. A device according to claim 3,
characterised in that the coils (2) and (3) are arranged on the limbs of a magnetic circuit.

5. A device according to any one of the preceding claims,
characterised in that the magnetic circuit is interrupted by at least one air gap.

6. A device according to any one of the preceding claims,
characterised in that a generator (6) generates an alternating voltage of any desired waveform which is continuous, periodic and of constant amplitude, and the generator (6) has a constant internal resistance (7).

7. A device according to claim 6,
characterised in that the primary coil (2) is connected to the generator (6).

8. A device according to claim 7,
characterised in that the secondary coil (3) is connected to a measuring circuit and that this measuring circuit has a constant internal resistance (8).

9. A device according to any one of the preceding claims,
characterised in that at least one of the two coils (2) or (3) is connected to a direct current source, and the core is of ferromagnetic material.

10. A device according to any one of the preceding claims,
characterised in that the core is provided with a rectangular slot or cutout.

11. A device according to any one of claims 4 to 10,
characterised in that a third coil is arranged on the limbs of the magnetic circuit.

## Revendications

1. Capteur de position à induction pour mesurer la position d'un objet de mesure mobile, avec un système de bobines, qui peut être influencé par un noyau couplé au mouvement de l'objet de mesure, capteur de position caractérisé en ce qu'il fonctionne selon le principe de variation du couplage de transformation et en ce qu'on forme un écran métallique contre les courants de Foucault nécessaire, pour la variation du couplage de transformation, écran constitué par au moins une partie du noyau, et en ce que l'objet de mesure est la tige de réglage (1) de la pompe d'injection d'un moteur à combustion interne, le noyau présentant un évidement (5) de type conique et/ou un enfoncement croissant, étant relié à la tige de réglage (1).

2. Dispositif selon la revendication 1, caractérisé en ce que le noyau possède un évidement de type conique (5) qui est constitué par un rectangle avec un triangle placé sur le côté qu'on veut du rectangle.

3. Dispositif selon la revendication 2, caractérisé en ce que le système de bobines présente au moins une bobine primaire (2) et une bobine secondaire (3).

4. Dispositif selon la revendication 3, caractérisé en ce que les bobines (2) et (3) sont mises sur des branches d'un circuit magnétique.

5. Dispositif selon l'une des revendications précédentes, caractérisé en ce que le circuit magnétique est interrompu par au moins un entrefer.

6. Dispositif selon l'une des revendications précédentes, caractérisé en ce que l'on peut produire avec un générateur (6) une tension alternative avec une courbe de n'importe quelle forme, qui est permanente, périodique et d'amplitude constante et en ce que le générateur (6) présente une résistance interne constante.

7. Dispositif selon la revendication 6, caractérisé en ce que la bobine primaire (2) est reliée au générateur (6).

8. Dispositif selon la revendication 7, caractérisé en ce que la bobine secondaire (3) est reliée à un circuit de mesure et en ce que ce circuit de mesure présente une résistance interne constante (8).

9. Dispositif selon l'une des revendications précédentes, caractérisé en ce qu'au moins l'une des deux bobines (2) ou (3) est reliée à une source de tension continue, et le noyau est en une matière ferromagnétique.

10. Dispositif selon l'une des revendications précédentes, caractérisé en ce que le noyau présente un évidement rectangulaire.

11. Dispositif selon l'une des revendications 4 à 10, caractérisé en ce que sur les branches du circuit magnétique est disposée une troisième bobine.
